# EUROPEAN PATENT APPLICATION

(11) **EP 3 306 371 A1**
(43) Date of publication of application: **11.04.2018**
(21) Application number: 15893623.7
(22) Date of filing: 29.05.2015
(51) Int. Cl.: G02B 27/01

(54) **DISPLAY MODULE AND ELECTRONIC DEVICE HAVING DISPLAY MODULE**

(71) Applicant: Shenzhen Royole Technologies Co., Ltd, Shenzhen, Guangdong 518172 (CN)
(72) Inventor: YANG, Songling, Shenzhen Guangdong 518052 (CN); CHEN, Songya, Shenzhen Guangdong 518052 (CN); LIU, Zihong, Shenzhen Guangdong 518052 (CN)
(74) Representative: Maiwald Patentanwalts GmbH
(86) International application number: PCT/CN2015/080363
(87) International publication number: WO 2016/191960

(57) **Abstract**

A display module (20) and an electronic device (8) having the display module (20). The display module (20) comprises: two optical modules (30); two first adjusting mechanisms (50), each first adjusting mechanism (50) being connected to one corresponding optical module (30), and the first adjusting mechanisms (50) being capable of adjusting a distance between the two optical modules (30); two image generation devices (40), each image generation device (40) being movably connected to one corresponding optical module (30), and an image generated by each image generation device (40) being projected by the corresponding optical module (30) in a pre-determined direction; and two second adjusting mechanisms (60), each second adjusting mechanism (60) being disposed on one corresponding first adjusting mechanism (50), connected to the corresponding image generation device (40), and capable of adjusting a distance between the image generation device (40) and the corresponding optical module (30). Thus, the display module (20) and the electronic device (8) can adjust a pupil distance and a diopter simultaneously, and can be suitable for more users.

## Description

### FIELD

The present disclosure relates to an adjustment mechanism, and particularly to an adjustable display component and an electronic device having the display component.

### BACKGROUND

At present, a near-to-eye display device, such as a head mounted display (HMD) and the like, becomes more and more popular. The working principle of the near-to-eye display device is to enlarge an image in a super-micro display screen by means of a group of precise optical lens, and to project the image to eyes, so that a wearer may view an enlarged virtual image, which is similar to an enlarged virtual image presented by viewing an object via a magnifying glass. In order to be suitable for pupillary distances of different wearers, most HMDs in the market at present have an adjustment function of pupillary distance. However, few HMDs have an adjustment function of diopter, which is suitable for a myopic or hyperopic wearer.

### SUMMARY

The embodiments of the present disclosure provide a display component which may adjust a pupillary distance and a diopter, and an electronic device having the display component.

The display component includes: two optical units; two first adjustment mechanisms, each of the two first adjustment mechanisms connecting to one of the two optical units corresponding to the first adjustment mechanism, and configured to adjust a distance between the two optical units; two image generation devices, each of the two image generation devices movably connecting to one of the two optical units corresponding to the image generation device, wherein an image generated by each of the two image generation devices is projected in a predetermined direction by the optical unit corresponding to the image generation device; and two second adjustment mechanisms, wherein each of the two second adjustment mechanisms is disposed to one of the two first adjustment mechanisms corresponding to the second adjustment mechanism, and connects to one of the two image generation devices corresponding to the second adjustment mechanism, and further configured to adjust a distance between the corresponding image generation device and the optical unit corresponding to the image generation device.

The electronic device includes a housing and the above display component accommodated in the housing, in which at least a part of the first adjustment mechanisms and at least a part of the second adjustment mechanisms are exposed out of the housing.

The first adjustment mechanism in the present disclosure may adjust the distance between the optical units, thus realizing an adjustment of the pupillary distance. The second adjustment mechanism may adjust the distance between the image generation device and the optical unit corresponding to the image generation device, thus realizing an adjustment of the diopter. Accordingly, the display component and the electronic device in the present disclosure may adjust both the pupillary distance and the diopter, thus being suitable for more users.

### BRIEF DESCRIPTION OF THE DRAWINGS

The following accompanying drawings are used for illustrating various embodiments of the present disclosure in detail in combination with specific embodiments. It should be understood that various elements illustrated in the accompanying drawings do not represent actual sizes and scale relations, and the accompanying drawings are only schematic views intended for clear illustration. Thus, the accompanying drawings should not be construed to limit the present disclosure.
Fig. 1 is a schematic view of a wearable electronic device provided in an embodiment of the present disclosure.
Fig. 2 is a schematic view of a display component of the wearable electronic device in Fig. 1.
Fig. 3 is a partially exploded view of the display component in Fig. 2, in which an optical unit and an image generation device of the display component in Fig. 2 are not illustrated in Fig. 3.
Fig. 4 is another schematic view of a structure in Fig. 3.

### DETAILED DESCRIPTION

In order to make the objectives, technical solutions and advantages of the present disclosure more definite and clear, the present disclosure is further illustrated in detail in combination with a plurality of embodiments and accompanying drawings. It should be understood that, the specific embodiments described herein are only used for explaining the present disclosure and not for limiting the present disclosure. It must be noted that, the "connection" between two elements mentioned in the present disclosure does not necessarily refer to a direct connection, it may be an indirect connection achieved through a third element.

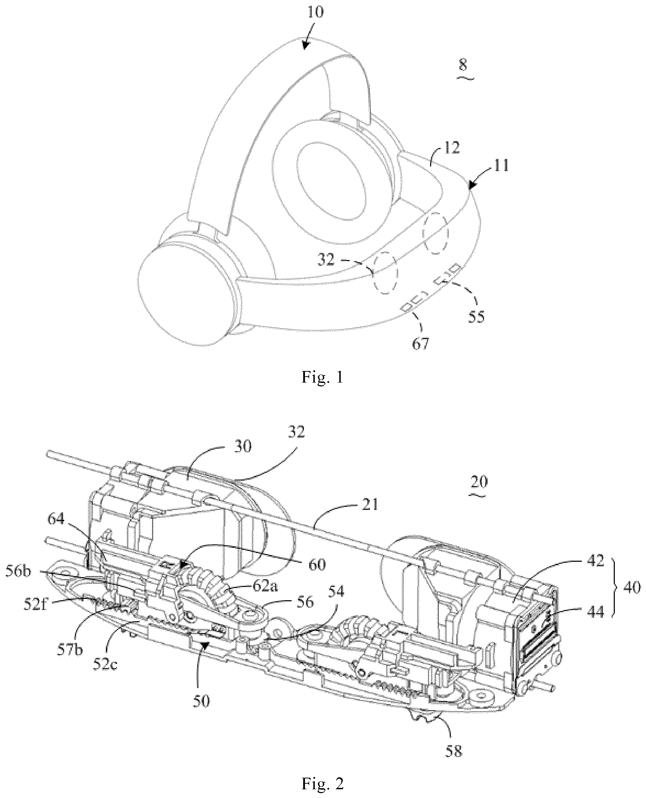

In combination with Fig. 1 and Fig. 2, which are schematic views of a wearable electronic device 8 provided in an embodiment of the present disclosure. The electronic device 8 may be a wearable video player, a wearable game device or a wearable navigation device and the like. The electronic device 8 includes a headset 10 and a display assembly 11 rotatably connected to the headset 10. The display assembly 11 includes a housing 12 and a display component 20 accommodated in the housing 12. Certainly, the display assembly 11 further includes related circuits, batteries and etc., which are not illustrated in the drawings. The display component 20 includes two optical units 30, two image generation devices 40, two first adjustment mechanisms 50 and two second adjustment mechanisms 60.

Each image generation device 40 movably connects to one optical unit 30 corresponding to the image generation device 40, and an image generated by each image generation device 40 is projected by the corresponding optical unit 30 in a predetermined direction. Each first adjustment mechanism 50 connects to one optical unit 30 corresponding to the first adjustment mechanism 50 and configured to adjust a distance between the two optical units 30. Each second adjustment mechanism 60 is disposed to one first adjustment mechanism 50 corresponding to the second adjustment mechanism 60, connects to one image generation device 40 corresponding to the second adjustment mechanism 60, and configured to adjust a distance between the corresponding image generation device 40 and the optical unit 30 corresponding to the image generation device 40. At least a part of the first adjustment mechanism 50 and at least a part of the second adjustment mechanism 60 are exposed out of the housing 12 so that it is convenient for a user to adjust. Accordingly, the display component 20 allows the user to adjust a pupillary distance and a diopter, and is suitable for more users to use.

The optical unit 30 includes one lens barrel and at least one lens set disposed in the lens barrel. The lens barrel has one entrance port (not illustrated in the drawings) and one exit port 32. The entrance port is located at a side facing the image generation device 40. Light passing through the entrance port enters the lens set to be refracted and reflected, and is finally emitted out from the exit port 32. The image generation device 40 includes a base portion 42 and a micro display unit 44 disposed to the base portion 42. The micro display unit 44 includes a micro displayer (not illustrated in the drawings), for example an OLED micro displayer, disposed to the entrance port. Accordingly, light of an image displayed in the micro displayer enters the entrance port and is projected by the lens set in the predetermined direction. An enlarged virtual image of the image displayed in the micro displayer is visible to human eyes when the light emitted out from the exit port 32 enters the human eyes.

In the embodiment, the display component 20 further includes two guiding rails 21. The optical units 30 and the image generation devices 40 both connect to the two guiding rails 21 by means of through holes respectively formed in the optical units 30 and the image generation devices 40, so as to move along a direction defined by the guiding rails 21. Furthermore, it should be understood that, in order to implement a guiding function, the optical unit 30 and the image generation device 40 may have their respective guiding rails. Additionally, the guiding rail is not limited to the structure illustrated in the drawings. For example, the guiding rail may be a groove (not illustrated in the drawings) formed in the housing 12, and the optical unit 30 and the image generation device 40 may be accommodated in the groove and move in the groove along a direction defined by the groove. In summary, it is only needed that the guiding rail can play a guiding function.

In combination with Fig. 2 to Fig. 4, each first adjustment mechanism 50 includes a base 52, a first moving element 54 movably connected to the base 52, an enveloping element 56 fixedly connected to the first moving element 54, and a first operating element 58 fixedly connected to the first moving element 54. The enveloping element 56 connects to the optical unit 30, and the first moving element 54 is driven to move when the first operating element 58 moves, so that the optical unit 30 moves along with the first moving element 54. Each second adjustment mechanism 60 includes a second operating element 62 and a second moving element 64 movably connecting with the second operating element 62. The second operating element 62 is movably disposed to the first moving element 54. The second moving element 64 may be driven to move by the second operating element 62. The second moving element 64 connects to the image generation device 40. When the second operating element 62 is actuated to drive the second moving element 64 to move, the image generation device 40 may have a movement. Moreover, both the second adjustment mechanism 60 and the image generation device 40 may move synchronously along with a movement of the first adjustment mechanism 50.

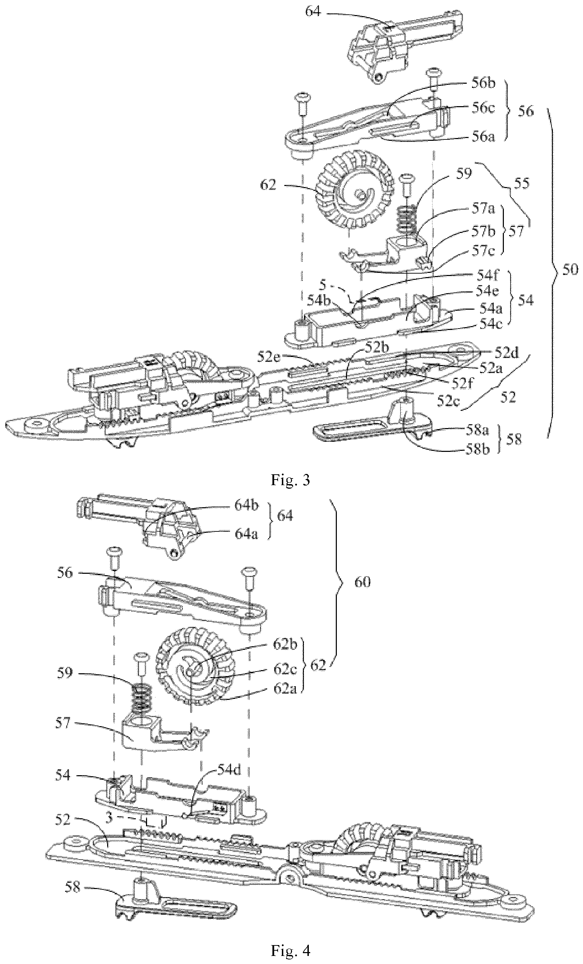

The base 52 includes a base plate 52a, and a first through hole 52b extending along a first direction, which is formed in the base plate 52a. In the embodiment, the base plate 52a is substantially square-sheet-shaped. The first direction is a length direction of the base plate 52a. The first moving element 54 includes a bottom plate 54a. The bottom plate 54a is also square-sheet-shaped in the embodiment. A second through hole 54b extending along the first direction is formed in the bottom plate 54a. The first operating element 58 includes an operating portion 58a and a connecting portion 58b extending in opposite directions. In the embodiment, the operating portion 58a includes a groove extending along a width direction of the base plate 52a, and the operating portion 58a and the optical unit 30 are located at two opposite sides of the base 52 respectively, so that it is convenient for the user to make operations by inserting his/her fingernail into the groove of the operating portion 58a. The connecting portion 58b is a protruding column having a threaded hole. The connecting portion 58b may be fixed to the first moving element 54 by passing through the first through hole 52b and then being engaged in the second through hole 54b, so that the first moving element 54 and the first operating element 58 may be actuated synchronously. During the movement, the first through hole 52b may be configured to have a function of restricting the first operating element 58 to move along the first direction. It should be understood that, in order to implement an adjustment of the first moving element 54, a protruding block extending from the first moving element 54 and until extending out of the first through hole 52b may be provided, such as a part in dashed lines indicated by numeral 3 in Fig. 4, which can also achieve an aim of facilitating operations for the user. In this case, the first operating element 58 may be omitted.

In the embodiment, the second operating element 62 is rotatably disposed to the first moving element 54. The second moving element 64 may be driven to translate in the first direction when the second operating element 62 rotates, so as to lead the image generation device 40 to move. Specifically, the second operating element 62 includes a rolling wheel 62a and a rotating shaft 62b. The rotating shaft 62b is disposed in a central axis of the rolling wheel 62a and is borne on the first moving element 54, so that the rolling wheel 62a may rotate around the rotating shaft 62b. The rolling wheel 62a includes a spiral accommodating hole 62c extending from a side adjacent to the rotating shaft 62b to an outer side of the rolling wheel 62a. The second moving element 64 includes a sliding shaft 64a arranged along the width direction of the base plate 52a.

A recessed portion 56a extending along the first direction is formed at each of two opposite sides of a central portion of the enveloping element 56. Two ends of the enveloping element 56 are fixed to the first moving element 54 by means of screws, and the rotating shaft 62b is clamped in the recessed portion 56a between the enveloping element 56 and the first moving element 54, so that it is difficult for the second operating element 62 to break away from the first moving element 54 and the second operating element 62 may also slide along the first direction. Certainly, in order to achieve this purpose, the first moving element 54 may also be provided with a corresponding position limiting element, such as a part in dashed lines indicated by numeral 5 in Fig. 3. In this case, the enveloping element 56 may be omitted. In the embodiment, the enveloping element 56 includes a third through hole 56b defined along the first direction, a part of the rolling wheel 62a extends out of the enveloping element 56 through the third through hole 56b, which is beneficial to improving a space utilization.

The second moving element 64 is movably disposed to the enveloping element 56. Meanwhile, the sliding shaft 64a passes through the accommodating hole 62c so as to slide along a spiral shape defined by the accommodating hole 62c. Accordingly, when the rolling wheel 62a rotates, a distance between the sliding shaft 64a and the rotating shaft 62b changes, so that the second moving element 64 can translate in the first direction, and thus the image generation device 40 is driven to move. Based on the embodiments above, in the operation process, the user can adjust the distance between the two optical units 30 by sliding the first operating element 58 so as to adjust the pupillary distance. In this process, the second adjustment mechanism 60 and the image generation device 40 also move synchronously along with the first adjustment mechanism 50. In addition, the user can adjust the distance between the image generation device 40 and the optical unit 30 by rotating the rolling wheel 62a, so as to adjust the diopter to be suitable for a degree of myopia or hyperopia of the user. Accordingly, the display component in the above embodiments realizes the adjustments of the pupillary distance and the diopter, and thus is suitable for more users.

It should be understood that, in other embodiments, the second moving element 64 may be directly disposed to the first moving element 54, instead of the enveloping element 56. In addition, it is not limited to the above embodiments that the second adjustment mechanism 60 achieves translation by means of rotation. For example, the second operating element may be a screw provided with a first thread and arranged along a direction of an assembling dashed line in Fig. 4, and the second moving element may be provided with a second thread fitted with the first thread. The second moving element translates in the first direction when being driven to rotate. Those skilled in the related art are familiar to a specific arrangement of threads, which will not be described in detail herein.

Preferably, the base 52 further includes a first guiding portion 52c disposed on the base plate 52a and extending along the first direction. The first guiding portion 52c fits with the first moving element 54 to further restrict the first moving element 54 to move along the first direction. In this case, a guiding function may be provided without defining the first through hole 52b. In the embodiment, the first guiding portion 52c is a flange extending upwards from the base plate 52a. Specifically, the first guiding portion may be a flange extending from each of two opposite sides of the base plate 52a towards the first moving element 54. More preferably, the base 52 further includes a first position limiting portion 52d, and the first moving element 54 includes a second position limiting portion 54c correspondingly. The first position limiting portion 52d fits with the second position limiting portion 54c, so that the first moving element 54 is prevented from breaking away from the base 52 in a direction substantially perpendicular to the first direction. In the embodiment, the second position limiting portion 54c may extend outwards from each of two opposite sides of the bottom plate 54a of the first moving element 54, and the first position limiting portion 52d extends from the flange of the first guiding portion 52c towards the other flange. Accordingly, under limitation of the first position limiting portion 52d, the second position limiting portion 54c is located between the first position limiting portion 52d and the base plate 52a.

Preferably, the base 52 is provided with a concavo-convex portion 52e, the first moving element 54 is further provided with an elastic pressing bar 54d, and the elastic pressing bar 54d is in a deformed state and abuts against the concavo-convex portion 52e. Accordingly, in a sliding process of the first moving element 54, interactions between the elastic pressing bar 54d and the concavo-convex portion 52e can feed it back to the user that the sliding is underway in form of vibration and/or sound, and thus it is convenient for the user's operations.

Preferably, the first adjustment mechanism 50 further includes a positioning unit 55 connected to the first moving element 54. And the positioning unit 55 can move along with the first moving element 54. The positioning unit 55 is configured to fit with the base 52 to fix the first moving element 54 to a desired position when the optical unit 30 moves to the desired position along with the first adjustment mechanism 50. Specifically, the base 52 further includes a first engaging portion 52f. The positioning unit 55 includes a connecting piece 57 and an elastic piece 59. The connecting piece 57 includes an accommodating portion 57a connected to the elastic piece 59 and a second engaging portion 57b. The first engaging portion 52f and the second engaging portion 57b keeps engaged with each other to provide a function of positioning under the action of the elastic piece 59. When the first engaging portion 52f and the second engaging portion 57b are disengaged from each other under the action of an external force, the elastic piece 59 applies an elastic force to the connecting piece 57, and the elastic force tends to enable the first engaging portion 52f and the second engaging portion 57b to be engaged with each other.

A force is applied to the elastic piece 59 to disengage the first engaging portion 52f from the second engaging portion 57b, so that a position of the first moving element 54 can be adjusted. When the external force is removed, the first engaging portion 52f and the second engaging portion 57b are engaged with each other again under the action of the elastic piece 59 so as to lock each other in this position. Accordingly, a misoperation or an error movement of the first adjustment mechanism 50 when adjusting the second adjustment mechanism 60 can be prevented effectively. In the embodiment, the first engaging portion 52f is a concavo-convex structure provided on an upper surface of the flange of the first guiding portion 52c and extends to a certain length along the first direction. The second engaging portion 57b is also a concavo-convex structure and configured to fit with the first engaging portion 52f. The accommodating portion 57a is a groove formed at a side of the connecting piece 57, the elastic piece 59 has a first end accommodated in the groove and a second end abutting against the enveloping element 56, and the elastic piece 59 may be in a compressed state all the time. In addition, the connecting portion 58b of the first operating element 58 may be fixed to the accommodating portion 57a of the connecting piece 57 by means of a screw.

Further, the connecting piece 57 further includes a supporting portion 57c, and the accommodating portion 57a and the supporting portion 57c are located at two opposite ends of the connecting piece 57. The supporting portion 57c is rotatably disposed to the first moving element 54, the connecting piece 57 may rotate around the supporting portion 57c, and the second operating element 62 is rotatably disposed to the supporting portion 57c. Accordingly, a possible position offset of the connecting piece 57 after a plurality of operations may be prevented. In the embodiment, the supporting portion 57c is semi-arc-shaped. Preferably, the first moving element 54 further includes a side plate 54e extending upwards from the bottom plate 54a. The side plate 54e defines a semi-arc groove 54f. The semi-arc-shaped supporting portion 57c is borne in the groove 54f. The rotating shaft 62b of the second operating element 62 is borne on the supporting portion 57c. The recessed portion 56a of the enveloping element 56 abuts against the rotating shaft 62b. Accordingly, the supporting portion 57c may rotate conveniently in the groove 54f when the second operating element 62 is pressed (i.e. moving upwards in Fig. 3), and also, a position of the connecting piece 57 may be also fixed.

Preferably, one third position limiting portion 56c is provided at each of two opposite sides of the enveloping element 56, and the second moving element 64 is provided with a fourth position limiting portion 64b correspondingly. The third position limiting portion 56c fits with the fourth position limiting portion 64b, so that the second moving element 64 is prevented from breaking away from the enveloping element 56 in the direction substantially perpendicular to the first direction. Also, the cooperation between the third position limiting portion 56c and the fourth position limiting portion 64b performs a function of guiding. In the embodiment, the third position limiting portion 56c is a protruding bar raised outwards from each of two opposite sides of the enveloping element 56 and extended along the first direction. The fourth position limiting portion 64b is a strip-shaped groove formed in the second moving element 64 along the first direction. It can be understood that the third position limiting portion may be disposed to the first moving element in other embodiments.

The descriptions above are only preferable embodiments of the present disclosure and are not used to limit the present disclosure. Any modifications, equal alternatives, and improvements made within the spirit and principle of the present disclosure should be included in the protection scope of the present disclosure.

## Claims

1. A display component, comprising:
two optical units;
two first adjustment mechanisms, each of the two first adjustment mechanisms connecting to one of the two optical units corresponding to the first adjustment mechanism, and configured to adjust a distance between the two optical units;
two image generation devices, each of the two image generation devices movably connecting to one of the two optical units corresponding to the image generation device, wherein an image generated by each of the two image generation devices is projected in a predetermined direction by the optical unit corresponding to the image generation device; and
two second adjustment mechanisms, wherein each of the two second adjustment mechanisms is disposed to one of the two first adjustment mechanisms corresponding to the second adjustment mechanism, and connects to one of the two image generation devices corresponding to the second adjustment mechanism, and further configured to adjust a distance between the corresponding image generation device and the optical unit corresponding to the image generation device.

2. The display component according to claim 1, further comprising at least one guiding rail, wherein each of the two optical units connects to the at least one guiding rail and is configured to move along the at least one guiding rail under an adjustment of a corresponding one of the two first adjustment mechanisms.

3. The display component according to claim 1, further comprising at least one guiding rail, wherein each of the two image generation devices connects to the at least one guiding rail and is configured to move along the at least one guiding rail under an adjustment of a corresponding one of the two second adjustment mechanisms.

4. The display component according to claim 1, further comprising at least one guiding rail,
wherein each of the two optical units connects to the at least one guiding rail and is configured to move along the at least one guiding rail under an adjustment of a corresponding one of the two first adjustment mechanisms,
wherein each of the two image generation devices connects to the at least one guiding rail and is configured to move along the at least one guiding rail under an adjustment of a corresponding one of the two second adjustment mechanisms.

5. The display component according to claim 1, wherein each of the two first adjustment mechanisms comprises a base and a first moving element, the corresponding optical unit is configured to move along with the first moving element, and the first moving element movably connects to the base.

6. The display component according to claim 5, wherein each of the two second adjustment mechanisms comprises a second operating element and a second moving element movably connecting with the second operating element, the second operating element is movably disposed to the first moving element of the corresponding first adjustment mechanism, at least a part of the second operating element and the corresponding optical unit are located at two opposite sides of the base of the corresponding first adjustment mechanism, and the second moving element is configured to be driven by the second operating element to lead the corresponding image generation device to move.

7. The display component according to claim 6, wherein the base comprises a base plate and a first guiding portion disposed on the base plate, the first guiding portion defines a first direction, and the first guiding portion fits with the first moving element so as to restrict the first moving element to move along the first direction.

8. The display component according to claim 7, wherein the base further comprises a first position limiting portion, the first moving element further comprises a second position limiting portion, and the first position limiting portion fits with the second position limiting portion so that the first moving element is prevented from breaking away from the base in a direction substantially perpendicular to the first direction.

9. The display component according to claim 8, wherein the second position limiting portion extends outwards from each of two opposite sides of the first moving element, the first guiding portion is a flange extending upwards from each of two opposite sides of the base plate, the first position limiting portion is disposed to the flange, and the second position limiting portion is located between the first position limiting portion and the base plate.

10. The display component according to claim 5, wherein the base comprises a concavo-convex portion, the first moving element further comprises an elastic pressing bar, and the elastic pressing bar is in a deformed state and abuts against the concavo-convex portion.

11. The display component according to claim 6, wherein the first adjustment mechanism further comprises a positioning unit connected to the first moving element, the positioning unit is configured to move along with the first moving element and fit with the base so as to secure the first moving element to a desired position when the optical unit moves to the desired position along with the first adjustment mechanism.

12. The display component according to claim 11, wherein the base comprises a first engaging portion, the positioning unit comprises a connecting piece and an elastic piece, the connecting piece comprises an accommodating portion connected to the elastic piece and a second engaging portion, and the first engaging portion and the second engaging portion are configured to keep engaging with each other under an action of the elastic piece, so as to provide a function of positioning.

13. The display component according to claim 12, wherein when the first engaging portion and the second engaging portion disengages from each other under an action of an external force, the elastic piece applies an elastic force to the connecting piece, and the elastic force enables the first engaging portion and the second engaging portion to be engaged with each other.

14. The display component according to claim 12, wherein each of the two first adjustment mechanisms further comprises a first operating element connected to the connecting piece, at least a part of the first operating element and the corresponding optical unit are located at two opposite sides of the base respectively, and the elastic piece is configured to be deformed when the first operating element is manipulated.

15. The display component according to claim 12, wherein the connecting piece further comprises a supporting portion, the accommodating portion and the supporting portion are located at two opposite ends of the connecting piece respectively, the supporting portion is rotatably disposed to the first moving element, the connecting piece is configured to rotate around the supporting portion, and the second operating element is rotatably disposed to the supporting portion.

16. The display component according to claim 14, wherein the first operating element further comprises an enveloping element secured to the first moving element, and the positioning unit and the second operating element are accommodated between the first operating element and the enveloping element.

17. The display component according to claim 16, wherein the second operating element comprises a rolling wheel and a rotating shaft, the rotating shaft is arranged on the first moving element, the rolling wheel is configured to rotate around the rotating shaft, the rolling wheel defines a spiral accommodating hole extending from a side adjacent to the rotating shaft to an outer side of the rolling wheel, and the second moving element comprises a sliding shaft passing through the accommodating hole, and the sliding shaft is configured to slide along the accommodating hole spirally.

18. The display component according to claim 17, wherein the enveloping element comprises a second guiding portion, the second moving element is movably disposed to the enveloping element and configured to move in a direction defined by the second guiding portion.

19. The display component according to claim 6, wherein the first adjustment mechanism further comprises a first operating element, the first operating element further comprises an enveloping element secured to the first moving element, the second operating element is rotatably disposed between the first operating element and the enveloping element, and the second moving element is movably disposed to the enveloping element.

20. The display component according to claim 19, wherein the second operating element comprises a rolling wheel and a rotating shaft, the rotating shaft is rotatably sandwiched between the first operating element and the enveloping element, the rolling wheel is configured to rotate around the rotating shaft, the rolling wheel defines a spiral accommodating hole extending from a side adjacent to the rotating shaft to an outside of the rolling wheel, and the second moving element comprises a sliding shaft passing through the accommodating hole and configured to slide along the accommodating hole spirally.

21. The display component according to claim 20, wherein the enveloping element comprises a third position limiting portion, the second moving element further comprises a fourth position limiting portion, and the third position limiting portion fits with the fourth position limiting portion so that the second moving element is prevented from breaking away from the enveloping element in a direction substantially perpendicular to the first direction.

22. An electronic device, comprising a housing and a display component accommodated in the housing according to any one of claims 1 to 21, wherein at least a part of the first adjustment mechanism and at least a part of the second adjustment mechanism are exposed out of the housing.
